Europäisches Patentamt

European Patent Office

Office européen des brevets

(11) Numéro de publication: **0 296 947**
**A1**

(12) # DEMANDE DE BREVET EUROPEEN

(21) Numéro de dépôt: 88401517.3

(22) Date de dépôt: 17.06.88

(51) Int. Cl.⁴: **H 04 N 9/82**

(30) Priorité: 18.06.87 FR 8708538

(43) Date de publication de la demande:
28.12.88 Bulletin 88/52

(84) Etats contractants désignés:
AT BE CH DE ES GB GR IT LI LU NL SE

(71) Demandeur: EDUVISION S.A.
31, Cours des Juilliottes B.P. No.58
F-94702 Maisons-Alfort Cédex (FR)

(72) Inventeur: Nabati, Bahman
19, rue Emile Dubois
F-75014 Paris (FR)

Broussaud, Georges
43, avenue Jean Racine
F-92330 Sceaux (FR)

(74) Mandataire: Bugnon-Hays, Claudine
PATCO S.A. 10, rue Vivienne
F-75002 Paris (FR)

(54) Procédé de lecture d'une image fixe de haute définition stockée sur vidéodisque.

(57) La présente invention concerne un procédé de lecture d'une image fixe de haute définition stockée sur un vidéodisque sous forme d'images partielles enregistrées sur des spires consécutives.

La tête de lecture du vidéodisque est préalablement positionnée au moins 4 spires avant la spire correspondant à la première des images partielles. On procède à la lecture des spires antérieures et le signal correspondant à la première des images partielles déclenche le stockage des signaux numériques correspondant aux images partielles de l'image fixe de haute définition considérée.

La présente invention concerne également un dispositif pour la mise en oeuvre dudit procédé.

EP 0 296 947 A1

## Description

### Procédé de lecture d'une image fixe de haute définition stockée sur vidéodisque

La présente invention concerne un procédé de lecture d'une image de haute définition stockée sur un vidéodisque, ainsi qu'un dispositif pour la mise en oeuvre dudit procédé.

Il concerne plus particulièrement un procédé de lecture d'une image fixe de haute définition stockée sur un vidéodisque standard sous forme d'images partielles enregistrées sur des spires consécutives, ainsi qu'un dispositif d'asservissement d'un lecteur standard et de traitement des signaux délivrés par un lecteur de vidéodisque de type connu pour la mise en oeuvre dudit procédé de lecture d'une image.

Il est connu de recourir à un vidéodisque standard destiné à l'enregistrement et à la restitution d'images de basse définition pour le stockage d'images fixes de haute définition, c'est-à-dire de plus de 1 000 lignes par image.

Selon une technique décrite par les inventeurs, notamment dans l'ouvrage "Les Vidéodisques" publié en 1986 aux Editions MASSON, l'image de haute définition est découpée en quatre images partielles de basse définition. Les images partielles sont enregistrées sur des spires consécutives d'un vidéodisque.

La lecture du vidéodisque ainsi obtenu est effectuée par tout lecteur standard et la reproduction d'une image de haute définition est possible après reconstruction à partir des signaux correspondant aux images partielles, à l'aide d'un décodeur connecté sur la sortie du lecteur de vidéodisque.

L'image de haute définition ainsi reconstruite est visualisée sur un moniteur de haute définition ou bien envoyée sur un réseau de transmission adapté.

La lecture d'une image fixe ou d'une série d'images fixes constituant les images partielles d'une image fixe de haute définition peut être réalisée en positionnant la tête de lecture au début de la spire correspondant à la première image partielle, à lire les spires correspondant aux images partielles constituant l'image fixe de haute définition considérée, à faire revenir la tête de lecture au début de la spire correspondant à la première image partielle et à réitérer le processus par bouclage, de façon à transmettre, pendant toute la durée de la visualisation de l'image déterminée les séquences de signaux permettant de reconstruire l'image de haute définition.

L'image vidéo étant décrite par un nombre impair de lignes, ce bouclage s'accompagne alors, quel que soit le standard de codage couleur retenu, d'une rupture du séquencement des signaux affectés à la transmission de l'information de chrominance.

Bien que les salves d'identification situées sur le pallier arrière des tops de synchronisation "ligne" permettent, en principe, de tenir compte de cette rupture et d'en corriger leurs effets, leur brièveté - 2,25 microsecondes, soit 10 alternances seulement - ne permettent pas le calage en fréquence des circuits de décodage couleur exigeant la continuité de phase de l'oscillateur local chargé de la démodulation.

Dans le cas d'un codage de la couleur selon le système PAL, la remise en phase des salves attachées à une ligne de rang donnée exige la description de quatre révolutions.

En effet, la fréquence de la sous-porteuse du signal vidéo de chrominance Fc est déterminée par :

$$Fc = \frac{4n + 3}{4} \cdot Fh + Fi$$

n étant un nombre entier, Fh la fréquence ligne et Fi la fréquence image.

Dans le cas d'un codage de la couleur selon le système NTSC, la périodicité de la remise en phase est de deux images car la fréquence de la sous-porteuse du signal vidéo de chrominance Fc est déterminée par :

$$Fc = \frac{2n + 1}{2} \cdot Fh.$$

Il en résulte, lors de l'arrêt sur image, une perturbation des circuits de décodage de la couleur conduisant à une mauvaise restitution des plages chromatiques saturées, se traduisant par une sorte de scintillement qui nuit considérablement à la qualité de l'image de haute définition ainsi reproduite.

Si cette perte de qualité est acceptable lors de la manipulation occasionnelle d'images fixes de basse définition, ce défaut est incomptatible avec la qualité exigée pour la restitution d'images de haute définition.

La présente invention a pour objet de remédier à cet inconvénient.

La lecture selon l'invention d'une image fixe de haute définition, stockée sur un vidéodisque sous forme d'images partielles enregistrées sur des spires consécutives, s'effectue en positionnant préalablement la tête de lecture du lecteur de vidéodisque au moins quatre spires avant la spire correspondant à la première image partielle.

La lecture desdites spires antérieures permet le calage en fréquence du décodeur.

Les trois signaux délivrés par le décodeur et correspondant aux trois couleurs fondamentales sont simultanément numérisés. Le signal correspondant à la première desdites images partielles déclenche le stockage desdits signaux numériques correspondant à la première image partielle dans une mémoire numérique. Le processus est réitéré afin de mémoriser chacune des images partielles.

Le traitement en parallèle des signaux délivrés par le décodeur couleur permet d'éliminer les défauts découlant du traitement séquentiel des signaux couleurs, tel qu'on le connaît dans les systèmes existants, où chaque image partielle est lue trois fois, un seul convertisseur analogique/numérique suffisant alors à alimenter les mémoires numériques pour la mise en forme de l'image.

La reconstruction d'une image de haute définition à partir d'images partielles de basse définition stockées dans des mémoires électroniques évite le bouclage des spires du vidéodisque habituellement mis en oeuvre dans l'état de la technique et conduisant à une perte de qualité des images visualisées.

La tête de lecture est positionnée préalablement vingt spires avant la spire correspondant à la première desdites images partielles.

La lecture des vingt spires antérieures permet à l'oscillateur local de disposer de près d'une seconde pour se caler très exactement sur la phase de la sous-porteuse chroma au travers des salves de référence insérées au début de chacune des lignes du signal vidéo composite délivré par le vidéodisque.

Ce délai d'une seconde environ est, par ailleurs, compatible avec un accès rapide à une image fixe donnée.

Chacune des images de haute définition est découpée en deux séries de deux images partielles, soit en quatre images partielles enregistrées sur quatre spires consécutives d'un vidéodisque.

Le décodage des signaux couleurs est préférentiellement réalisé selon le système PAL ou NTSC.

La présente invention concerne également un dispositif de traitement des signaux délivrés par un lecteur de vidéodisque de type connu et d'asservissement dudit lecteur de vidéodisque, en vue de la mise en oeuvre du procédé de lecture d'une image fixe de haute définition découpée en plusieurs images partielles enregistrées sur des spires consécutives d'un vidéodisque, comportant de préférence un décodeur PAL ou NTSC, délivrant trois signaux couleurs numérisés simultanément par trois convertisseurs analogiques/ numériques, une mémoire électronique destinée à stocker les signaux numériques correspondant à chacune des images partielles et déclenchée par le signal correspondant au numéro de la première image partielle de l'image de haute définition considérée, ainsi que des circuits de commande du positionnement de la tête de lecture du vidéodisque.

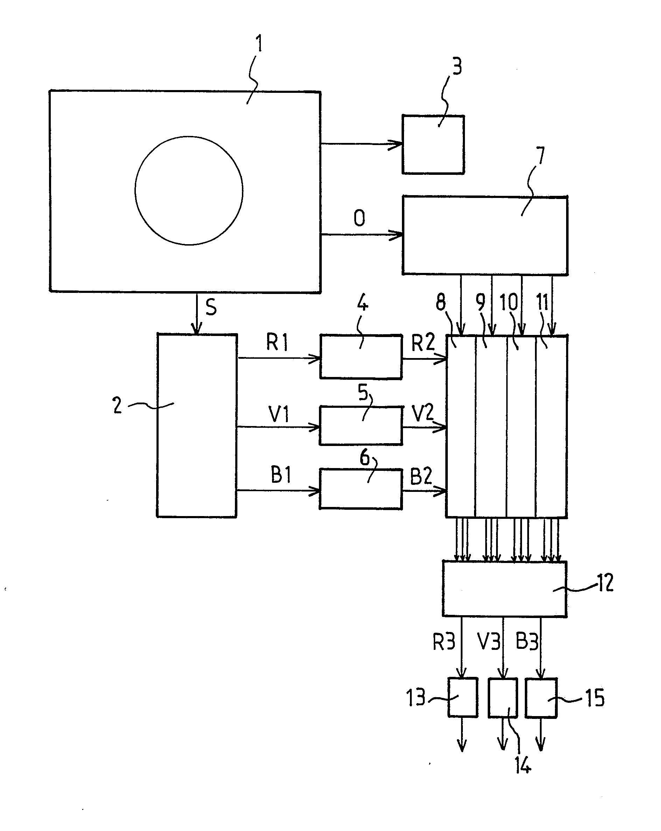

D'autres particularités et avantages de l'invention apparaîtront clairement dans la description suivante présentée à titre d'exemple non limitatif et où la figure unique représente le diagramme d'un dispositif de traitement et d'asservissement selon la présente invention.

Le signal S délivré par le lecteur de vidéodisque (1) est décodé par un décodeur couleur (2) PAL ou NTSC.

La sélection d'une image fixe de haute définition s'effectue à partir d'un circuit de commande et d'asservissement (3) qui commande le positionnement de la tête de lecture du lecteur de vidéodisque (1) vingt spires avant la spire correspondant à la première des quatre images partielles constituant ladite image de haute définition déterminée.

Le lecteur de vidéodisque passe ensuite en mode de lecture et, la lecture desdites vingt spires antérieures s'effectuant en moins d'une seconde, permet le calage de l'oscillateur local sur la phase de la sous-porteuse chroma, au travers des salves de référence insérées au début de chacune des lignes du signal vidéo composite délivré par le vidéodisque.

Chaque image partielle étant identifiée par son numéro d'ordre au début de chacune des trames, la saisie de l'information chrominance portée successivement par les quatre spires correspondant aux quatre images partielles consirérées de rang N, N + 1, N + 2 et N + 3, peut avoir lieu sans erreur, de sorte que le décodage peut en être fait comme s'il s'agissait d'un programme normal de télévision.

Le décodeur couleur (2) délivre trois signaux R1, V1 et B1, qui sont simultanément convertis en trois signaux numériques R2, V2 et B2 par trois convertisseurs analogiques/numériques (4), (5) et (6).

Lorsque le circuit de synchronisation (7) reçoit du lecteur de vidéodisque le signal correspondant au numéro d'ordre de la présente image partielle N, composant l'image de haute définition à visualiser, il déclenche la mémorisation des signaux R2, V2 et B2 de la première image N, dans une première mémoire (8).

Le signal correspondant au numéro d'ordre de chacune des quatre images partielles suivantes permet, de la même façon, le déclenchement de la mémorisation des signaux numériques correspondants dans les mémoires (9), (10) et (11).

Lorsque la totalité des signaux numériques correspondant aux images partielles a été mémorisée, le circuit de commande et d'asservissement (3) interrompt la lecture du vidéodisque.

Un calculateur (12) reconstruit un signal numérique correspondant à une image de haute définition, à partir des signaux mémorisés correspondant aux images partielles.

Ledit calculateur (12) délivre une série de trois signaux numériques R3, V3 et B3 correspondant aux couleurs fondamentales de l'image de haute définition ainsi reconstruite.

Lesdits signaux R3, V3 et B3 sont convertis en analogique par trois convertisseurs numériques/ analogiques (13), (14) et (15), délivrant des signaux exploitables par un périphérique de haute définition de type connu, par exemple un moniteur de visualisation.

La présente invention n'est pas limitée au mode de réalisation décrit mais s'étend à toutes les variantes.

Notamment, l'image de haute définition peut être découpée en un nombre quelconque d'images partielles de basse définition.

Le nombre de spires dues avant la spire correspondante à la première image partielle peut également être supérieure ou inférieure à vingt.

Les circuits de codage peuvent, par ailleurs, faire partie intégrante du lecteur de vidéodisque standard ou, au contraire, constituer un circuit particulier du dispositif selon la présente invention.

## Revendications

1) Procédé de lecture d'une image fixe de haute définition stockée sur un vidéodisque sous forme d'images partielles enregistrées sur des spires consécutives, caractérisé en ce que la tête de lecture est préalablement positionnée au moins quatre spires avant la spire correspondant à la première desdites images partielles, en ce que l'on procède à la lecture desdites spires antérieures, en ce que les signaux délivrés sont décodés et en ce que les trois signaux délivrés par le décodeur et correspondant aux trois couleurs fondamentales sont simultanément numérisés, en ce que le signal correspondant au numéro de la première desdites images partielles déclenche le stockage desdits signaux numériques correspondant à la première image partielle dans une mémoire électronique et en ce que l'on réitère la mémorisation des signaux numériques pour chacune desdites images partielles.

2) Procédé de lecture d'une image fixe de haute définition stockée sur un vidéodisque sous forme d'images partielles enregistrées sur des spires consécutives selon la revendication 1, caractérisé en ce que l'on positionne préalablement la tête de lecture vingt spires avant la spire correspondant à la première image partielle.

3) Procédé de lecture d'une image fixe de haute définition stockée sur un vidéodisque sous forme d'images partielles enregistrées sur des spires consécutives selon l'une quelconque des revendication 1 à 2, caractérisé en ce que l'image de haute définition est divisée en quatre images partielles enregistrées sur quatre spires consécutives d'un vidéodisque.

4) Procédé de lecture d'une image fixe de haute définition stockée sur un vidéodisque sous forme d'images partielles enregistrées sur des spires consécutives selon l'une quelconque des revendications 1 à 3, caractérisé en ce que le décodage couleur correspond au système PAL.

5) Procédé de lecture d'une image fixe de haute définition stockée sur un vidéodisque sous forme d'images partielles enregistrées sur des spires consécutives selon l'une quelconque des revendications 1 à 3, caractérisé en ce que le décodage couleur correspond au système NTSC.

6) Dispositif de traitement des signaux délivrés par un lecteur de vidéodisque de type connu et d'asservissement dudit décodeur de vidéodisque pour la mise en oeuvre du procédé de lecture d'une image fixe de haute définition selon l'une quelconque des revendications 1 à 5, caractérisé en ce qu'il comporte un convertisseur analogique/numérique (4), (5), (6) par couleur fondamentale, destiné à numériser les signaux délivrés par le décodeur couleur du lecteur de vidéodisque, une série de mémoires (8), (9), (10), (11) électroniques destinées à stocker les signaux correspondant aux images partielles déclenchées par le signal correspondant au numéro de la première image partielle, ainsi que des circuits de commande (3) du positionnement de la tête de lecture du vidéodisque.

7) Dispositif de traitement des signaux délivrés par un lecteur de vidéodisque de type connu et d'asservissement dudit décodeur de vidéodisque pour la mise en oeuvre du procédé de lecture d'une image fixe de haute définition selon la revendication 6, caractérisé en ce qu'il comporte en outre un décodeur couleur (2) PAL ou NTSC délivrant auxdits convertisseurs analogiques/numériques trois signaux correspondant aux trois couleurs fondamentales.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 139 869  (A.W. HOLT)<br>* Colonne 2, ligne 60 - colonne 3, ligne 48; colonne 5, ligne 57 - colonne 6, ligne 12; colonne 10, ligne 61 - colonne 11, ligne 13; colonne 11, ligne 65 - colonne 12, ligne 7 * | 1,6 | H 04 N   9/82 |
| A | | 2,3 | |
| | --- | | |
| Y | FR-A-2 578 084  (PIONEER ELECTRONIC CORP.)<br>* Résumé; page 5, ligne 31 - page 6, ligne 17; page 9, lignes 3-24 * | 1,6 | |
| | --- | | |
| A | PATENT ABSTRACTS OF JAPAN, vol. 9, no. 216 (E-340)[1939], 3 septembre 1985; & JP-A-60 75 179 (SONY K.K.) 27-04-1985 | 1,4-7 | |
| | --- | | |
| A | US-A-4 090 223  (A.W. HOLT)<br>* Résumé; colonne 7, lignes 55-64; colonne 8, lignes 28-36; colonne 8, lignes 56-62 * | 1,3 | |
| | --- | | **DOMAINES TECHNIQUES RECHERCHES (Int. Cl.4)** |
| A | US-A-4 358 786  (H.-J. PFLEIDERER et al.)<br>* Résumé; figure 1; colonne 3, lignes 18-39 * | 1,6 | H 04 N<br>G 11 B |
| | --- | | |
| D,A | G. BROUSSAUD: "Les Vidéodisques", Annexe: "Vidéodisque haute définition", 1986, pages 163-167, Masson, Paris, FR<br>* En entier * | 1-7 | |
| | ----- | | |

Le présent rapport a été établi pour toutes les revendications

| Lieu de la recherche | Date d'achèvement de la recherche | Examinateur |
|---|---|---|
| LA HAYE | 18-08-1988 | BOSCH F.M.D. |